(19) Europäisches Patentamt European Patent Office Office européen des brevets

(11) **EP 3 054 461 B1**

(12) **EUROPEAN PATENT SPECIFICATION**

(45) Date of publication and mention of the grant of the patent:
**02.01.2019 Bulletin 2019/01**

(51) Int Cl.:
**H01F 1/057** (2006.01)        **H01F 41/02** (2006.01)
**B22F 3/24** (2006.01)          **B22F 9/02** (2006.01)
**B22F 9/04** (2006.01)

(21) Application number: **16157081.7**

(22) Date of filing: **24.02.2016**

(54) **RARE EARTH PERMANENT MAGNET MATERIAL AND MANUFACTURING METHOD THEREOF**

SELTENERD-PERMANENTMAGNET-MATERIAL UND HERSTELLUNGSVERFAHREN DAFÜR

MATÉRIAU MAGNÉTIQUE PERMANENT DE TERRE RARE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2015 CN 201510546132**

(43) Date of publication of application:
**10.08.2016 Bulletin 2016/32**

(73) Proprietor: **Tianhe (Baotou) Advanced Tech Magnet Co., Ltd.**
**Baotou Inner Mongolia 014030 (CN)**

(72) Inventors:
- **DONG, Yi**
  **014030 Baotou (CN)**
- **DIAO, Shulin**
  **014030 Baotou (CN)**
- **YI, Haibo**
  **014030 Baotou (CN)**
- **WU, Shujie**
  **014030 Baotou (CN)**
- **HU, Zhanjiang**
  **014030 Baotou (CN)**
- **ZHANG, Qian**
  **014030 Baotou (CN)**
- **LIU, Gazhen**
  **014030 Baotou (CN)**
- **MIAO, Juchang**
  **014030 Baotou (CN)**
- **YUAN, Yi**
  **014030 Baotou (CN)**
- **CHEN, Ya**
  **014030 Baotou (CN)**
- **YUAN, Wenjie**
  **014030 Baotou (CN)**

(74) Representative: **Engelhard, Markus**
**Boehmert & Boehmert**
**Anwaltspartnerschaft mbB**
**Pettenkoferstrasse 22**
**80336 München (DE)**

(56) References cited:
EP-A1- 2 239 747      EP-A1- 2 477 199
JP-A- 2005 175 138    JP-A- 2005 210 876
JP-A- 2012 169 436

## Description

### TECHNICAL FIELD OF THE INVENTION

The present invention relates to a rare earth permanent magnet material and manufacturing method thereof, in particular to a sintered neodymium-iron-boron rare earth permanent magnet material and manufacturing method thereof.

### BACKGROUND OF THE INVENTION

As the attention to reduction of energy consumption is increasing worldwide, energy saving and emission reduction have become the focus of each country. Compared with non-permanent magnet motors, permanent magnet motors can increase energy efficiency ratio. Therefore, in order to reduce energy consumption, neodymium-iron-boron (Nd-Fe-B) permanent magnet material is used to produce electric motors in various fields, such as air condition compressors, electric vehicles, hybrid vehicles. Since the operation temperature of these electric motors is relatively high, the magnets are required to have a relatively high intrinsic coercive force ($H_{cj}$); in addition, in order to increase the magnetic flux density of the motors, the magnets are also required to have a relatively high magnetic energy product (BH).

Conventional neodymium-iron-boron manufacturing process is difficult to meet the requirements of high magnetic energy product and high intrinsic coercive force. Even such requirements are met; a large amount of heavy rare earth of Dysprosium (Dy) and Terbium (Tb) is also demanded. Because the worldwide reserves of Dy and Tb are limit, using a large amount of Dy and Tb will lead to a price increase of magnets and an accelerated exhaustion of the heavy rare earth resource.

In order to improve the performance of permanent magnet material and to reduce the use of heavy rare earth, a lot of work has been done in the field. For example, CN101404195A discloses a method for preparing a rare earth permanent magnet, comprising: providing a sintered magnet body consisting of 12-17 atom% of a rare earth, 3-15 atom% of B, 0.01-11 atom% of a metal element, 0.1-4 atom% of O, 0.05-3 atom% of C, 0.01-1 atom% of N, and the balance of Fe, disposing on a surface of the magnet body a powder comprising an oxide, fluoride and/or oxyfluoride of another rare earth, and heat treating the powder-covered magnet body at a temperature not higher than the sintering temperature in vacuum or in an inert gas so that the other rare earth is absorbed in the magnet body. This method is characterized in that the object of infiltration is achieved by heat treating the magnet whose surface is disposed with oxide, fluoride and/or oxyfluoride of the heavy rare earth; while the disadvantage thereof is the introduction of O and F which are harmful substances to magnets. More importantly, the surface of the magnet where infiltration is completed will have more substances which are similar to oxide skin, and needs grinding, resulting in a waste of magnetic material.

CN101506919A discloses a method for manufacturing a permanent magnet which can effectively improve the magnetizing properties and coercive force by efficiently diffusing Dy into grain boundary phases without deteriorating a surface of a Nd-Fe-B-based sintered magnet and does not require any subsequent working process. In this method, the Nd-Fe-B-based sintered magnet and Dy are arranged apart from each other at a certain distance in a processing chamber. Then the processing chamber is heated under a reduced pressure to evaporate Dy while elevating the temperature of the sintered magnet to a predetermined temperature and to supply and deposit the evaporated Dy atoms onto the surface of the sintered magnet; during this operation, the supplying amount of Dy atoms onto the sintered magnet is controlled so as to diffuse and homogeneously infiltrate them into the grain boundary phases of the sintered magnet before a Dy layer is formed on the surface of the sintered magnet. This method is characterized in heating a substance containing a heavy rare earth to form steam; while the disadvantage thereof is that the cost of expensive equipments, low evaporation efficiency. The results of actual comparison show that this method is inferior to the former method in the effect of increasing $H_{cj}$.

CN101615459A discloses a method for improving properties of a sintered neodymium-iron-boron permanent magnet by diffusing a heavy rare earth compound in grain boundary of a rapid-hardening flake, in which an infiltration treatment is performed before sintering. The disadvantage thereof is that during the high temperature sintering process of the infiltrated magnet, the heavy rare earth which has been enriched in an intergranular phase will diffuse to the interior of the main phase, causing heavy rare earth averaging, so the effect is worse.

On the other hand, plating a metal coating on the surface of a neodymium-iron-boron magnet has been disclosed in much prior art. In these prior art, multi-arc ion plating process is an important process of plating a metal coating on the surface of the neodymium-iron-boron magnet.

For example, CN104018133A discloses a process for preparing a multilayer composite protective coating on the surface of a sintered neodymium-iron-boron magnet by multi-arc ion plating, in which by adopting the multi-arc ion plating technology, a composite protective coating consisting of a transition layer, a corrosion-resistant layer, a surface barrier layer and a wear-resistant layer is prepared on the surface of the sintered neodymium-iron-boron magnet, the corrosion resistance of the sintered neodymium-iron-boron magnet is obviously improved. CN104651783A discloses a process for plating aluminum on the surface of a permanent magnet neodymium-iron-boron magnetic steel, in which multi-arc ion plating is adopted to plate aluminum, and the permanent magnet neodymium-iron-boron magnetic steel in which aluminum plating has been completed is subjected to passivating treatment, so that the surface plated aluminum which has a fine surface and good corrosion prevention can be obtained. CN102031522A discloses a method for preparing a neodymium-iron-boron magnet coated with an aluminum or aluminum alloy composite coating, in which multi-arc ion plating technology is adopted to deposit an aluminum or aluminum alloy film on the neodymium-iron-boron magnet, and then phosphating treatment is performed; the prepared composite coating has good corrosion resistance and good adhesion performance, and has no influence on the magnetism of the neodymium-iron-boron matrix. However, none of these prior art disclose or teach plating an elementary substance or an alloy containing a heavy rare earth element on the surface of a sintered neodymium-iron-boron magnet by adopting multi-arc ion plating. Moreover, the object of these prior art is only to provide a corrosion resistant coating for the surface of the sintered neodymium-iron-boron magnet. None of these prior art disclose or teach infiltrating the heavy rare earth element plated on the surface of the sintered neodymium-iron-boron magnet to the intergranular phase in the sintered neodymium-iron-boron magnet, so as to improve magnetic parameters of the sintered neodymium-iron-boron magnet.

JP 2005210876 A relates to a magnet for small-sized motor.

JP 2005175138 A describes a heat-resisting rate earth magnet.

JP 2012169436 A relates to a method of manufacturing magnet.

EP 2477199 A1 describes a rare earth magnet.

## SUMMARY OF THE INVENTION

An object of the present invention is to provide a rare earth permanent magnet material having a sum of an intrinsic coercive force ($H_{cj}$, in unit of kOe) and a maximum magnetic energy product ($(BH)_{max}$, in unit of MGOe) of 66.8 or more. A further object of the present invention is to provide a method for manufacturing a rare earth permanent magnet material, which has high production efficiency and does not increase harmful substances, and the cost of equipments is relatively low.

The present invention provides a rare earth permanent magnet material, said rare earth permanent magnet material fulfills a formula as follows:

$$H_{cj}+(BH)_{max} \geq 66.8,$$

wherein, $H_{cj}$ represents an intrinsic coercive force of the permanent magnet material with a unit of kOe;
$(BH)_{max}$ represents a maximum magnetic energy product of the permanent magnet material with a unit of MGOe.
The formula is a sum of two parameters with different units, and serves as a figure of merit for internal evaluation. As comparison to other art is not intended, the scaling is along CGS units for simplicity.

The present invention provides a method for manufacturing the above mentioned rare earth permanent magnet material, as specified in claim 1.

## DETAILED DESCRIPTION OF EMBODIMENTS

The present invention will be further described hereinafter in combination with the following specific embodiments, but the protection scope of the invention is not limited thereto.

The "remanence" in the present invention refers to a value of the magnetic flux density at a point on the saturant magnetic hysteresis loop where the magnetic field strength is zero, and is commonly referred to as $B_r$ or $M_r$, with the unit of Tesla (T) or Gauss (Gs).

The "intrinsic coercive force" in the present invention refers to the magnetic field strength when the magnetic field is monotonically decreased to zero from the saturant magnetization state of the magnet and reversely increased to make its magnetization strength decrease to zero along the saturant magnetic hysteresis loop, and is commonly referred to as $H_{cj}$ or $_M H_c$, with the unit of Oersted (Oe).

The "magnetic energy product" in the present invention refers to the product of the magnetic flux density (B) of any point on the demagnetization curve and the corresponding magnetic field strength (H), and is commonly referred to as BH. The maximum value of BH is referred to as "maximum magnetic energy product" which is commonly referred to as $(BH)_{max}$, with the unit of Gauss• Oersted (GOe).

The "heavy rare earth element" in the present invention is also referred to as "Yttrium-group element", including nine elements of Yttrium (Y), Gadolinium (Gd), Terbium (Tb), Dysprosium (Dy), Holmium (Ho), Erbium (Er), Thulium (Tm), Ytterbium (Yb), and Lutetium (Lu).

The "inert atmosphere" in the present invention refers to the atmosphere which does not react with the neodymium-iron-boron magnet and not affect its magnetism. In the present invention, the "inert atmosphere" includes an atmosphere consisting of nitrogen or inert gases (helium, neon, argon, krypton, xenon).

The "vacuum" in the present invention means that an absolute vacuum degree is less than or equal to 0.1 Pa, preferably, is less than or equal to 0.01 Pa, more preferably, is less than or equal to 0.001 Pa. In the present invention, a smaller value of the absolute vacuum degree represents a higher vacuum degree.

The "average particle size D50" in the present invention represents the equivalent diameter of the largest particles when the cumulative distribution in the particle size distribution curve is 50%.

**<Rare earth permanent magnet material>**

The rare earth permanent magnet material as produced by the present invention fulfills a formula: $H_{cj}+(BH)_{max} \geq 66.8$; wherein, $H_{cj}$ represents the intrinsic coercive force of the permanent magnet material with the unit of kOe; $(BH)_{max}$ represents the maximum magnetic energy product of the permanent magnet material with the unit of MGOe. Preferably, $H_{cj}+(BH)_{max} \geq 67$; preferably, $H_{cj}+(BH)_{max} \geq 68.5$; more preferably, $H_{cj}+(BH)_{max} \geq 70$; most preferably, $H_{cj}+(BH)_{max} \geq 72$.

**<Manufacturing method of rare earth permanent magnet material>**

The manufacturing method of the permanent magnet material of the present invention comprises a multi-arc ion plating step S2) and a infiltrating step S3). Preferably, The manufacturing method of the present invention further comprises a magnet manufacturing step S1) and an aging treatment step S4).

**<Magnet manufacturing step S1)>**

The manufacturing method of the present invention preferably comprises a magnet manufacturing step S1): manufacturing a sintered neodymium-iron-boron magnet. In the present invention, the magnet manufacturing step S1) comprises steps as follows:

S1-1) smelting step: smelting a neodymium-iron-boron magnet raw material so that the smelted neodymium-iron-boron magnet raw material forms a master alloy;

S1-2) powdering step: crushing the master alloy obtained from the smelting step S1-1) into magnetic powder;

S1-3) shaping step: pressing the magnetic powder obtained from the powdering step S1-2) into a green body for sintering under the action of an alignment magnetic field; and

S1-4) sintering step: sintering to shape the green body obtained from the shaping step S1-3) into a sintered neodymium-iron-boron magnet.

In accordance with the present invention, the magnet manufacturing step S1 further comprises the step:

S1-5) cutting step: cutting the sintered neodymium-iron-boron magnet.

**Smelting step S1-1)**

In order to prevent the oxidation of the neodymium-iron-boron magnet raw material and the master alloy prepared therefrom, the smelting step S1-1) of the present invention is carried out in vacuum. The strip casting process is that the smelted neodymium-iron-boron magnet raw material is rapidly cooled and solidified and is spined into an alloy sheet (master alloy). The inventor of this application has surprisingly found that as compared with the ingot casting process, the strip casting process can avoid the appearance of $\alpha$-Fe which affects the homogeneousness of magnetic powder, and can avoid the appearance of neodymium-rich phase in lump shape, so that it is advantageous for refining the grain size of a main phase $Nd_2Fe_{14}B$ of the master alloy. The strip casting process of the present invention is performed in a vacuum smelting and rapid-hardening furnace. The alloy sheet (master alloy) of the present invention has a thickness of 0.3 mm.

**Powdering step S1-2)**

In order to prevent the oxidation of the master alloy and the magnetic powder crushed therefrom, the powdering step S1-2) of the present invention is carried out in inert atmosphere. The powdering process S1-2) of the present invention preferably comprises steps as follows:

S1-2-1) coarsely crushing step: crushing the master alloy into coarse magnetic powder with a larger particle size; and
S1-2-2) milling step: milling the coarse magnetic powder obtained from the coarsely crushing step S1-2-1) into fine magnetic powder.

In the present invention, the average particle size D50 of the coarse magnetic powder obtained from the coarsely crushing step S1-2-1) is 300 $\mu$m. In the present invention, the average particle size D50 of the fine magnetic powder obtained from the milling step S1-2-2) is 3.8 $\mu$m.

In the coarsely crushing step S1-2-1) of the present invention, a hydrogen decrepitation process is adopted to crush the master alloy into coarse magnetic powder. The hydrogen decrepitation process comprises steps as follows: firstly making the master alloy absorb hydrogen, initializing a volume expansion of the master alloy crystal lattice through the reaction of the master alloy and hydrogen so that the master alloy breaks into coarse magnetic powder; and then heating the coarse magnetic powder to perform dehydrogenation. In accordance with a preferably embodiment of the present invention, the hydrogen decrepitation process of the present invention is preferably carried out in a hydrogen decrepitation furnace. In the hydrogen decrepitation process of the present invention, the hydrogen absorption temperature is 20 °C-400 °C, preferably 100 °C-300 °C; and the hydrogen absorption pressure is 50-600 kPa, preferably 100-500 kPa; and the dehydrogenation temperature is 500-1000 °C , preferably 700-900°C.

In the milling step S1-2-2) of the present invention, a jet milling process is adopted to crush the coarse magnetic powder into fine magnetic powder. The jet milling process is a process to make the coarse magnetic powder accelerated and hit each other and then crushed by using a gas flow. The gas flow is nitrogen flow, preferably high purity nitrogen flow. The high purity nitrogen flow may have $N_2$ content of 99.0 wt% or more, preferably 99.9 wt% or more. The pressure of the gas flow may be 0.1-2.0 MPa, preferably 0.5-1.0 MPa, more preferably 0.6-0.7 MPa.

**Shaping step S1-3)**

In order to prevent oxidation of the magnetic powder, the shaping step S1-3) of the present invention is preferably carried out in vacuum. The magnetic powder pressing process of the present invention is a mould pressing process. The mould pressing process is well known in this field, which will be not repeated herein. In the shaping step S1-3) of the present invention, the direction of alignment magnetic field is aligned parallel or perpendicular to the pressing direction of the magnetic powder. There is no specific limitation on the strength of the alignment magnetic field which depends on practical desires. In accordance with the present invention, the strength of the alignment magnetic field is 1.8T. The density of the green body obtained from the shaping step S1-3) of the present invention is 4.3g/cm$^3$.

**Sintering step S1-4)**

In order to prevent oxidation of the green body for sintering, the sintering step S1-4) of the present invention is carried out in a vacuum sintering furnace. The sintering temperature is 1055 °C; the sintering time is 5 hours. The density of the sintered neodymium-iron-boron magnet obtained from the sintering step S1-4) of the present invention is 7.63g/cm$^3$; the oxygen content is preferably less than 2000 ppm, more preferably less than 1500 ppm, most preferably less than 1200 ppm.

**Cutting step S1-5)**

In the cutting step S1-5) of the present invention, the cutting process adopts a slicing process and/or a wire cut electrical discharge machining. In the present invention, the sintered neodymium-iron-boron magnet is cut into magnets with a size of 38 mm x 23.5 mm x 2.2 mm.

**< Multi-arc ion plating step S2>**

The manufacturing method of the present invention comprises a multi-arc ion plating step S2): a multi-arc ion plating process is adopted to deposit a metal containing a heavy rare earth element on the surface of the sintered neodymium-iron-boron magnet, wherein the sintered neodymium-iron-boron magnet has a thickness of 10 mm or less in at least one direction. Preferably, the direction in which the thickness is 10 mm or less is not the alignment direction of the sintered neodymium-iron-boron magnet.

The metal containing a heavy rare earth element of the present invention is an alloy of Tb and Al.

The multi-arc ion plating step S2) of the present invention adopts a multi-arc ion plating process. In order to prevent oxidation of the sintered neodymium-iron-boron magnet, the multi-arc ion plating step S2) is carried out in vacuum of 0.0005 Pa. In the multi-arc ion plating process of the present invention, the metal containing a heavy rare earth element is used as a cathode material; discharging is performed by applying a voltage by a multi-arc ion discharging device;

during the discharging, the cathode material evaporates to form smoke-like microparticles which deposit on the surface of the sintered neodymium-iron-boron magnet. The multi-arc ion discharging device used by the present invention may be those known in this field, which normally comprises a processing chamber, a substrate (a sintered neodymium-iron-boron magnet), an anode, a cathode (a metal containing a heavy rare earth element), magnetic field and an arc power supply, wherein the processing chamber is earthed or is applied with a bias voltage of -50 to -1000V, preferably -100 to -800V as the anode; the metal containing a heavy rare earth element is used as the cathode; the substrate (the sintered neodymium-iron-boron magnet) is placed in the processing chamber; after the arc power supply is turned on, arc discharging occurs between the cathode (the metal containing a heavy rare earth element) and the anode, leading to evaporation and ionization of the cathode material, to inject a molten cathode material which is deposited on the surface of the substrate (the sintered neodymium-iron-boron magnet). In the multi-arc ion plating process of the present invention, the purity of the metal containing a heavy rare earth element which is used as the cathode is preferably 99.0% or more, more preferably 99.9% or more, most preferably 99.99% or more. In the multi-arc ion plating process of the present invention, the time of applying voltage in the multi-arc ion discharging device is 5 min. The discharging voltage of the multi-arc ion discharging device of the present invention may be 80-250 V, preferably 100-150 V, more preferably 110-120 V.

**<Infiltrating step S3)>**

The manufacturing method of the present invention comprises an infiltrating step (i.e., diffusion step) S3): heat treating the sintered neodymium-iron-boron magnet obtained from the multi-arc ion plating step S2).

The object of performing heat treatment in the present invention is to infiltrate the heavy rare earth element deposited on the surface of the sintered neodymium-iron-boron magnet to the intergranular phase in the sintered neodymium-iron-boron magnet. The temperature of heat treatment is 900 °C; the time of heat treatment is 5 hours.

In accordance with the present invention, the infiltrating step S3) is carried out simultaneously with the multi-arc ion plating step S2).

**<Aging treatment step S4)>**

The manufacturing method of the present invention preferably comprises an aging treatment step S4): aging treatment is performed on the sintered neodymium-iron-boron magnet.

In order to prevent oxidation of the sintered neodymium-iron-boron magnet, the aging treatment step S4) of the present invention is carried out in vacuum. In the present invention, the temperature of the aging treatment is 510 °C; the time of the aging treatment is 3 hours.

In the following examples and comparative examples, the discharging voltage of the multi-arc ion discharging device is 120V.

Non-inventive

Example 1 and Comparative Example 1

A method for manufacturing a permanent magnet material is as follows:

S1) magnet manufacturing step:

S1-1) smelting step: formulating the raw materials according to weight percentages as follows: 23.5% of Nd, 5.5% of Pr, 2% of Dy, 1% of B, 1% of Co, 0.1% of Cu, 0.08% of Zr, 0.1% of Ga and the balance of Fe; putting the raw materials in a vacuum smelting and rapid-hardening furnace to smelt them and manufacture an alloy sheet with an average thickness of 0.3 mm;

S1-2) powdering step: subjecting the alloy sheet obtained from the smelting step S1-1) to hydrogen absorption and dehydrogenation in a hydrogen decrepitation furnace to make the alloy sheet form coarse magnetic powder of about 300 $\mu$m; milling the coarse magnetic powder in a jet milling with nitrogen as a media into fine magnetic powder with an average particle size D50 of 4.2 $\mu$m;

S1-3) shaping step: applying an alignment magnetic field strength of 1.8T to shape the fine magnetic powder obtained from the powdering step S1-2) in a moulding press under protection of nitrogen to form a green body for sintering, the green body has a density of 4.3g/cm$^3$;

S1-4) sintering step: putting the green body obtained from the shaping step S1-3) in a vacuum sintering furnace with an absolute vacuum degree above 0.1 Pa, and sintering it at a high temperature of 1050 °C for 5 hours, to obtain a sintered neodymium-iron-boron magnet with a density of 7.6 g/cm$^3$ and a size of 50 mm $\times$ 40 mm

× 30 mm;
S1-5) cutting process: cutting the sintered neodymium-iron-boron magnet obtained from the sintering step S1-4) into magnets with a size of 38 mm × 23.5 mm × 4 mm;

S2) multi-arc ion plating step: fixing a Tb metal block material on a multi-arc ion discharging device; and placing the sintered neodymium-iron-boron magnet obtained from the cutting process S1-5) which needs infiltration in a processing chamber; the processing chamber is vacuumed to an absolute vacuum degree of 0.0003 Pa; discharging is performed by applying a voltage to the multi-arc ion discharging device, so that the Tb metal block material forms smoke-like microparticles during discharging; the time of applying voltage is 2 min, 5 min, 10 min, respectively;

S3) infiltrating step: heat treating the sintered neodymium-iron-boron magnet at 900 °C for 5 hours simultaneously with the multi-arc ion plating step S2);

S4) aging treatment step: in a condition of an absolute vacuum degree above 0.01 Pa, performing the aging treatment on the sintered neodymium-iron-boron magnet obtained from the infiltrating step S3) at 500 °C for 3 hours, to obtain the neodymium-iron-boron permanent magnet material of the present invention.

Then the neodymium-iron-boron permanent magnet material obtained from the aging treatment step S4) is cut into magnets with a size of 9 mm × 9 mm × 4 mm and measured.

For a comparison, the aging treatment is performed on the sintered neodymium-iron-boron magnet obtained from the magnet manufacturing step S1) in vacuum at 500 °C for 3 hours; then, the magnet is processed into magnets with a size of 9 mm × 9 mm × 4 mm and measured, referred to as Comparative example 1.

Magnetic parameters of Example 1 and Comparative example 1 are shown as in Table 1.

Table 1

|  | Conditions | $B_r$ (kGs) | $(BH)_{max}$ (MGOe) | $H_{cj}$ (kOe) | $H_{cj}+(BH)_{max}$ |
|---|---|---|---|---|---|
| comparative example 1 | Non-infiltration | 13.82 | 45.85 | 18.25 | 64.1 |
| example 1 | 2 min | 13.85 | 45.84 | 20.98 | 66.82 |
|  | 5 min | 13.80 | 45.78 | 24.74 | 70.52 |
|  | 10 min | 13.79 | 45.79 | 25.02 | 70.81 |

It can be seen from Table 1 that the time of multi-arc ion discharging affects remanence, maximum magnetic energy product, intrinsic coercive force, and the sum of intrinsic coercive force and maximum magnetic energy product of the neodymium-iron-boron permanent magnet material. The longer the time of multi-arc ion discharging is, the more the values of the above parameters increase. However, as the time of multi-arc ion discharging increases to a certain degree, the values of the above parameters will not obviously increase.

Non-inventive

Example 2 and Comparative Example 2

A method for manufacturing a permanent magnet material is as follows:

S1) magnet manufacturing step:

S1-1) smelting step: formulating the raw materials according to weight percentages as follows: 22.3% of Nd, 6.4% of Pr, 3% of Dy, 1% of B, 2% of Co, 0.2% of Cu, 0.08% of Zr, 0.15% of Ga and the balance of Fe; putting the raw materials in a vacuum rapid-hardening furnace to smelt them to manufacture an alloy sheet with an average thickness of 0.3 mm;
S1-2) powdering step: subjecting the alloy sheet obtained from the smelting step S1-1) to hydrogen absorption and dehydrogenation in a hydrogen decrepitation furnace to make the alloy sheet form coarse magnetic powder of about 300 μm; milling the coarse magnetic powder in jet milling with nitrogen as media into metal powder with an average particle size D50 of 3.8 μm;
S1-3) shaping step: applying an alignment magnetic field strength of 1.8T to shape the fine magnetic powder obtained from the powdering step S1-2) in a moulding press under protection of nitrogen to form a green body for sintering, the green body has a density of 4.3g/cm$^3$;
S1-4) sintering step: putting the green body obtained from the shaping step S1-3) in a vacuum sintering furnace with an absolute vacuum degree above 0.1 Pa, and sintering it at a high temperature of 1055 °C for 5 hours, to obtain a sintered neodymium-iron-boron magnet with a density of 7.62 g/cm$^3$ and a size of 50 mm × 40 mm × 30 mm;

S1-5) cutting process: cutting the sintered neodymium-iron-boron magnet obtained from the magnet manufacturing step S1) into magnets with a size of 38 mm × 23.5 mm × 2 mm;

S2) multi-arc ion plating step: fixing an alloy block material of Dy and Al on a multi-arc ion discharging device, wherein the weight percentage of Dy in the alloy block material is 80%; and placing the sintered neodymium-iron-boron magnet obtained from the cutting process S1-5) which needs infiltration in a processing chamber; the processing chamber is vacuumed to an absolute vacuum degree of 0.0005 Pa; discharging is performed by applying a voltage to the multi-arc ion discharging device, so that the alloy block material forms smoke-like microparticles during discharging; the time of applying voltage is 5 min;

S3) infiltrating step: heat treating the sintered neodymium-iron-boron magnet at different temperatures for 5 hours respectively after the multi-arc ion plating step S2); the temperatures are 900 °C, 850 °C, 950 °C, respectively;

S4) aging treatment step: in a condition of an absolute vacuum degree above 0.01 Pa, performing the aging treatment on the sintered neodymium-iron-boron magnet obtained from the infiltrating step S3) at 510 °C for 3 hours, to obtain the neodymium-iron-boron permanent magnet material of the present invention.

Then the neodymium-iron-boron permanent magnet material obtained from the aging treatment step S4) is cut into magnets with a size of 9 mm × 9 mm × 2 mm and measured.

For a comparison, the aging treatment is performed on the sintered neodymium-iron-boron magnet obtained from the magnet manufacturing step S1) in vacuum at 510 °C for 3 hours; the magnet is processed into magnets with a size of 9 mm × 9 mm × 2 mm and measured, referred to as Comparative example 2.

Magnetic parameters of Example 2 and Comparative example 2 are shown as in Table 2.

Table 2

|  | Conditions | B$_r$ (kGs) | (BH)$_{max}$ (MGOe) | H$_{cj}$ (kOe) | H$_{cj}$+(BH)$_{max}$ |
|---|---|---|---|---|---|
| comparative example 2 | Non-infiltration | 13.42 | 42.92 | 21.57 | 64.49 |
| example 2 | 850 °C | 13.45 | 42.90 | 25.88 | 68.78 |
|  | 900 °C | 13.40 | 42.84 | 26.81 | 69.65 |
|  | 950 °C | 13.32 | 42.24 | 24.56 | 66.8 |

It can be seen from Table 2 that the temperature of the heat treatment of the infiltrating step S2) affects remanence, maximum magnetic energy product, intrinsic coercive force, and the sum of intrinsic coercive force and maximum magnetic energy product of the neodymium-iron-boron permanent magnet material. Where the temperature of the heat treatment is either relatively low or too high, the effect of increasing the values of the above parameters will be not obvious.

Example 3 and Comparative Example 3

A method for manufacturing a permanent magnet material is as follows:

S1) magnet manufacturing step:

S1-1) smelting step: formulating the raw materials according to weight percentages as follows: 27.4% of Nd, 4.5% of Dy, 0.97% of B, 2% of Co, 0.2% of Cu, 0.08% of Zr, 0.2% of Ga, 0.3% of Al and the balance of Fe; putting the raw materials in a vacuum rapid-hardening furnace to smelt them and manufacture an alloy sheet with an average thickness of 0.3 mm;

S1-2) powdering step: subjecting the alloy sheet obtained from the smelting step S1-1) to hydrogen absorption and dehydrogenation in a hydrogen decrepitation furnace to make the alloy sheet form coarse magnetic powder of about 300 μm; milling the coarse magnetic powder in jet milling with nitrogen as media into metal powder with an average particle size D50 of 3.8 μm;

S1-3) shaping step: applying an alignment magnetic field strength of 1.8T to shape the fine magnetic powder obtained from the powdering step S1-2) in a moulding press under protection of nitrogen to form a green body for sintering, the green body has a density of 4.3g/cm$^3$;

S1-4) sintering step: putting the green body obtained from the shaping step S1-3) in a vacuum sintering furnace with an absolute vacuum degree above 0.1 Pa, and sintering it at a high temperature of 1055 °C for 5 hours, to obtain a sintered neodymium-iron-boron magnet with a density of 7.63 g/cm$^3$ and a size of 50 mm $\times$ 40 mm $\times$ 30 mm;

S1-5) cutting step: cutting the sintered neodymium-iron-boron magnet obtained from the sintering step S1-4) into magnets with a size of 38 mm $\times$ 23.5 mm $\times$ 2.2 mm;

S2) multi-arc ion plating step: fixing an alloy block material of Tb and Al on a multi-arc ion discharging device, wherein the weight percentage of Tb in the alloy block material is 80%; and placing the sintered neodymium-iron-boron magnet obtained from the cutting process S1-5) which needs infiltration in a processing chamber; the processing chamber is vacuumed to an absolute vacuum degree of 0.0005 Pa; discharging is performed by applying a voltage to the multi-arc ion discharging device, so that the alloy block material forms smoke-like microparticles during discharging; the time of applying voltage is 5 min;

S3) infiltrating step: heat treating the sintered neodymium-iron-boron magnet at 900 °C for 5 hours simultaneously with the multi-arc ion plating step S2);

S4) aging treatment step: in a condition of an absolute vacuum degree above 0.01 Pa, performing the aging treatment on the sintered neodymium-iron-boron magnet obtained from the infiltrating step S3) at 510 °C for 3 hours, to obtain the neodymium-iron-boron permanent magnet material of the present invention.

Then the neodymium-iron-boron permanent magnet material obtained from the aging treatment step S4) is cut into magnets with a size of 9 mm $\times$ 9 mm $\times$ 2 mm and measured.

For a comparison, the aging treatment is performed on the sintered neodymium-iron-boron magnet obtained from the magnet manufacturing step S1) in a condition of an absolute vacuum degree above 0.01 Pa at 510 °C for 3 hours; the magnet is processed into magnets with a size of 9 mm $\times$ 9 mm $\times$ 2 mm and measured, referred to as comparative example 3.

Magnetic parameters of Example 3 and Comparative example 3 are shown as in Table 3.

Table 3

|  | Conditions | Br (kGs) | $(BH)_{max}$ (MGOe) | $H_{cj}$ (kOe) | $H_{cj}$+$BH_{max}$ |
|---|---|---|---|---|---|
| comparative example 3 | Non-infiltration | 12.95 | 40.37 | 25.53 | 65.9 |
| example 3 | 900 °C | 12.89 | 39.98 | 32.41 | 72.39 |

It can be seen from Table 3 that comparing example 3 in which the multi-arc ion plating step and the infiltrating step have been carried out with comparative example 3 in which the multi-arc ion plating step and the infiltrating step have not been carried out, remanence and maximum magnetic energy product of example 3 decrease a little, but both of intrinsic coercive force and the sum of intrinsic coercive force and maximum magnetic energy product of example 3 increase obviously.

It can be seen from the effects of the above examples that the present invention adopts a multi-arc ion plating process to deposit the metal containing a heavy rare earth element on the surface of the sintered neodymium-iron-boron magnet; the heavy rare earth element is melt and infiltrated to the intergranular phase in the sintered neodymium-iron-boron magnet through heat treatment; and then a neodymium-iron-boron permanent magnet material is manufactured through aging treatment. The neodymium-iron-boron permanent magnet material obtained by the manufacturing method of the present invention has a sum of an intrinsic coercive force ($H_{cj}$, in unit of kOe) and a maximum magnetic energy product ($(BH)_{max}$, in unit of MGOe) of 66.8 or more. Moreover, because the multi-arc ion plating process is adopted, the manufacturing method of the present invention has high production efficiency and does not increase harmful substances, and the price of devices is relatively low.

## Claims

1. A method for manufacturing a rare earth permanent magnet material, **characterized in that** the method comprises steps as follows:

S1) magnet manufacturing step:

S1-1) smelting step: formulating the raw materials according to weight percentages as follows: 27.4% of Nd, 4.5% of Dy, 0.97% of B, 2% of Co, 0.2% of Cu, 0.08% of Zr, 0.2% of Ga, 0.3% of Al and the balance of Fe; putting the raw materials in a vacuum rapid-hardening furnace to smelt them and manufacture and alloy sheet with an average thickness of 0.3 mm;

S1-2) powdering step: subjecting the alloy sheet obtained from the smelting step S1-1) to hydrogen absorption and dehydrogenation in a hydrogen decrepitation furnace to make the alloy sheet form coarse magnetic powder of 300 μm; milling the coarse magnetic powder in jet milling with nitrogen as media into metal powder with an average particle size D50 of 3.8 μm;

S1-3) shaping step: applying an alignment magnetic field strength of 1.8T to shape the fine magnetic powder obtained from the powdering step S1-2) in a moulding press under protection of nitrogen to form a green body for sintering, wherein the green body has a density of 4.3 g/cm$^3$;

S1-4) sintering step: putting the green body obtained from the shaping step S1-3) in a vacuum sintering furnace with an absolute vacuum degree above 0.1 Pa, and sintering it at a high temperature of 1055°C for 5 hours, to obtain a sintered neodymium-iron-boron magnet with a density of 7.63 g/cm3 and a size of 50 mm x 40 mm x 30 mm;

S1-5) cutting step: cutting the sintered neodymium-iron-boron magnet obtained from the sintering step S1-4) into magnets with a size of 38 mm x 23.5 mm x 2.2 mm;

S2) multi-arc ion plating step: fixing an alloy block material of Tb and Al on a multi-arc ion discharging device, wherein the weight percentage of Tb in the alloy block material is 80%; and placing the sintered neodymium-iron-boron magnet obtained from the cutting process S1-5) which needs infiltration in a processing chamber, and vacuuming the processing chamber to an absolute vacuum degree of 0.0005 Pa, and performing discharging by applying a voltage to the multi-arc ion discharging device so that the alloy block material forms smoke-like microparticles during discharging, and wherein the time of applying voltage is 5 min;

S3) infiltrating step: heat treating the sintered neodymium-iron-boron magnet at 900 °C for 5 hours simultaneously with the multi-arc ion plating step S2);

S4) aging treatment step: in a condition of a absolute vacuum degree above 0.01 Pa, performing the aging treatment of the sintered neodymium-iron-boron magnet obtained from the infiltrating step S3) at 510°C for 3 hours, to obtain the rare earth permanent magnet material.

**Patentansprüche**

1. Verfahren zum Herstellen eines Seltenerd-Permanentmagnetmaterials, **dadurch gekennzeichnet, dass** das Verfahren folgende Schritte umfasst:

S1) Magnet-Herstellungsschritt:

S1-1) Schmelzschritt: Formulieren der Rohstoffe gemäß Gewichtsprozenten wie folgt: 27,4% Nd, 4,5% Dy, 0,97% B, 2% Co, 0,2% Cu, 0,08% Zr, 0,2% Ga, 0,3% Al und den Rest von Fe; Einbringen der Rohstoffe in einen Vakuum-Schnellhärtungsofen, um diese zu schmelzen und eine Legierungsschicht mit einer durchschnittlichen Dicke von 0,3 mm herzustellen;

S1-2) Pulverisierungschritt: Unterziehen der aus dem Schmelzschritt S1-1) erhaltenen Legierungsschicht einer Wasserstoffabsorption und einem Dehydrieren in einem Wasserstoffdekrepitationsofen, um zu bewirken, dass die Legierungsschicht ein grobkörniges Magnetpulver von 300 μm bildet; Mahlen des grobkörnigen Magnetpulvers in einer Strahlmahlung mit Stickstoff als Medium zu Metallpulver mit einer durchschnittlichen Partikelgröße D 50 von 3,8 μm;

S1-3) Formungsschritt: Anlegen einer Ausrichtungsmagnetfeldstärke von 1,8 T, um das aus dem Pulverisierungschritt S1-2) erhaltene feine Magnetpulver in einer Formpresse unter dem Schutz von Stickstoff zu formen, um einen Grünkörper zum Sintern zu bilden, wobei der Grünkörper eine Dichte von 4,3 g/cm$^3$ hat;

S1-4) Sinterschritt: Einbringen des aus dem Formungsschritt S1-3) erhaltenen Grünkörpers in einen Vakuum-Sinterofen mit einem absoluten Vakuumgrad von über 0,1 Pa, und Sintern desselben bei einer hohen Temperatur von 1055 °C für 5 Stunden, um einen gesinterten Neodym-Eisen-Bor-Magneten mit einer Dichte von 7,63 g/cm$^3$ und einer Größe von 50 mm x 40 mm x 30 mm zu erhalten;

S1-5) Schneideschritt: Schneiden des aus dem Sinterschritt S1-4) erhaltenen gesinterten Neodym-Eisen-Bor-Magneten in Magneten mit einer Größe von 38 mm x 23,5 mm x 2,2 mm;

S2) Mehrbogenionenplattierungsschritt: Fixieren eines Legierungsblockmaterials aus Tb und Al auf einer Mehrbogenionen-Entladungsvorrichtung, wobei der prozentuale Gewichtsanteil von Tb in dem Legierungsblockmaterial 80 % ist; und Platzieren des aus dem Schneideverfahren S1-5) erhaltenen gesinterten Neodym-Eisen-Bor-Magneten, der Infiltration bedarf, in eine Bearbeitungskammer, und Vakuumieren der Bearbeitungskammer auf einen absoluten Vakuumgrad von 0,0005 Pa, und Durchführen einer Entladung durch Anlegen einer Spannung an die Mehrbogenionen-Entladungsvorrichtung, sodass das Legierungsblockmaterial während der Entladung Rauch-ähnliche Mikropartikel bildet, und wobei die Dauer des Anlegens der Spannung 5 min beträgt;

S3) Infiltrierungsschritt: Hitzebehandeln des gesinterten Neodym-Eisen-Bor-Magneten bei 900 °C für 5 Stunden gleichzeitig mit dem Mehrbogenionenplattierungsschritt S2);

S4) Alterungsbehandlungsschritt: Durchführen des Alterungsbehandlungsschrittes von dem aus dem Infiltrierungsschritt S3) erhaltenen gesinterten Neodym-Eisen-Bor-Magneten in einem Zustand eines absoluten Vakuumgrads von über 0,01 Pa bei 510 °C für 3 Stunden, um das Seltenerd-Permanentmagnetmaterial zu erhalten.

## Revendications

1. Procédé de fabrication d'un matériau magnétique permanent de terre rare, **caractérisé en ce que** le procédé comprend des étapes comme suit :

   S1) étape de fabrication d'aimant :

   S1-1) étape de fusion : formulation des matières premières en fonction de pourcentages en poids comme suit : 27,4 % de Nd, 4,5 % de Dy, 0,97 % de B, 2 % de Co, 0,2 % de Cu, 0,08 % de Zr, 0,2 % de Ga, 0,3 % d'Al et le reste de Fe ; placement des matières premières dans un four à vide pour durcissement rapide pour les faire fondre et fabriquer une feuille d'alliage d'une épaisseur moyenne de 0,3 mm ;

   S1-2) étape de pulvérisation : soumission de la feuille d'alliage obtenue à l'étape de fusion S1-1) à une absorption d'hydrogène et à une déshydrogénation dans un four de décrépitation à l'hydrogène pour faire en sorte que la feuille d'alliage forme une poudre magnétique grossière de 300 $\mu$m ; broyage de la poudre magnétique grossière dans un broyage à jet avec de l'azote comme support en poudre métallique avec une taille de particule moyenne D50 de 3,8 $\mu$m ;

   S1-3) étape de formage : application d'une intensité de champ magnétique d'alignement de 1,8 T pour former la poudre magnétique fine obtenue à l'étape de pulvérisation S1-2) dans une presse à compression sous protection d'azote pour former un corps vert pour frittage, dans lequel le corps vert a une densité de 4,3 g/cm$^3$ ;

   S1-4) étape de frittage : placement du corps vert obtenue à l'étape de formage S1-3) dans un four de frittage à vide avec un degré de vide absolu supérieur à 0,1 Pa, et frittage de celui-ci à une température élevée de 1055 °C pendant 5 heures, pour obtenir un aimant de néodyme-fer-bore fritté d'une densité de 7,63 g/cm$^3$ et une taille de 50 mm x 40 mm x 30 mm ;

   S1-5) étape de coupage : coupage de l'aimant de néodyme-fer-bore fritté obtenu à l'étape de frittage S1-4) en aimants d'une taille de 38 mm x 23,5 mm x 2,2 mm ;

   S2) étape de placage ionique à arcs multiples : fixation d'un bloc en alliage de Tb et Al sur un dispositif de décharge ionique à arcs multiples, dans lequel le pourcentage en poids de Tb dans le bloc en alliage est de 80 % ; et placement de l'aimant de néodyme-fer-bore fritté obtenu à partir du procédé de coupage S1-5) qui a besoin d'une infiltration dans une chambre de traitement, et création d'un vide dans la chambre de traitement jusqu'à un degré de vide absolu de 0,0005 Pa, et réalisation de la décharge en appliquant une tension au dispositif de décharge ionique à arcs multiples de sorte que le bloc en alliage forme des microparticules de type fumée pendant la décharge, et dans lequel le temps d'application d'une tension est de 5 minutes ;

   S3) étape d'infiltration : traitement thermique de l'aimant de néodyme-fer-bore fritté à 900 °C pendant 5 heures simultanément à l'étape de placage ionique à arcs multiples S2) ;

   S4) étape de traitement de vieillissement : dans une condition d'un degré de vide absolu supérieur à 0,01 Pa, réalisation du traitement de vieillissement de l'aimant de néodyme-fer-bore fritté obtenu à l'étape d'infiltration S3) à 510 °C pendant 3 heures, pour obtenir le matériau magnétique permanent de terre rare.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101404195 A
- CN 101506919 A
- CN 101615459 A
- CN 104018133 A
- CN 104651783 A
- CN 102031522 A
- JP 2005210876 A
- JP 2005175138 A
- JP 2012169436 A
- EP 2477199 A1